# EUROPÄISCHE PATENTSCHRIFT

(11) **EP 3 999 386 B1**
(45) Veröffentlichungstag und Bekanntmachung des Hinweises auf die Patenterteilung: **25.06.2025**
(21) Anmeldenummer: 20739985.8
(22) Anmeldetag: 13.07.2020
(51) Int. Cl.: B60S 1/38

(54) **WISCHBLATT, INSBESONDERE FÜR EINE SCHEIBE EINES KRAFTFAHRZEUGS**
WIPER BLADE, IN PARTICULAR FOR A WINDSCREEN OF A MOTOR VEHICLE
BALAI D'ESSUIE-GLACE, EN PARTICULIER POUR UNE VITRE D'UN VÉHICULE À MOTEUR

(30) Priorität: 19.07.2019 DE 102019210730
(43) Veröffentlichungstag der Anmeldung: 25.05.2022
(73) Patentinhaber: Robert Bosch GmbH, 70442 Stuttgart (DE)
(72) Erfinder: LAY, Reiner, 52072 Aachen (DE); BUSEYNE, Wim, 3500 Hasselt (BE)
(86) Internationale Anmeldenummer: PCT/EP2020/069720
(87) Internationale Veröffentlichungsnummer: WO 2021/013600

(56) Entgegenhaltungen:
- EP-A1- 0 625 452
- WO-A1-2013/087289
- DE-A1- 102009 001 043
- DE-A1- 19 745 003
- US-A- 3 031 709
- US-A- 5 568 670

## Beschreibung

### Stand der Technik

Die Erfindung betrifft ein Wischblatt, insbesondere für eine Scheibe eines Kraftfahrzeugs, nach Gattung des unabhängigen Anspruchs.

Es sind schon zahlreiche Wischblätter für Kraftfahrzeuge bekannt, die eine Federschiene aufweisen, an der ein Haltemittel zur Befestigung an einem Wischarm angeordnet ist. Diese Wischblätter umfassen darüber hinaus eine Wischleiste und ein Kippstegelement.

Derartige Wischblätter sind jedoch aufwendig in der Fertigung und relativ kostenintensiv. Aufgabe der Erfindung ist es daher, ein einfacheres und kostengünstigeres Wischblatt herzustellen.

Weiterer Stand der Technik ist aus der US 5,568,670 und der WO 2013/087289 A1 bekannt.

### Offenbarung der Erfindung

### Vorteile der Erfindung

Das erfindungsgemäße Wischblatt mit den Merkmalen des Hauptanspruchs hat den Vorteil, dass das Kippstegelement formschlüssig an der Wischleiste, sowie an der Federschiene befestigt ist und dadurch die Federschiene mit der Wischleiste verbindet.

Auf diese Weise ist ein einfaches und kostengünstiges Wischblatt gegeben, welches darüber hinaus bei verschiedensten Temperaturen ein gleichmäßiges und optimales Wischbild erzeugt.

Durch die in den Unteransprüchen aufgeführten Maßnahmen ergeben sich vorteilhafte Weiterbildungen und Verbesserungen der im Hauptanspruch angegebenen Merkmale.

Nach der Erfindung weist die Wischleiste eine erste Wischkante und eine zweite Wischkante auf und im Betrieb legt durch Verformung des Kippstegelements jeweils nur die erste Wischkante oder die zweite Wischkante auf der Scheibe auf.

Weiterhin ist es vorteilhaft, wenn das Kippstegelement ein Formschlusselement aufweist, das mit einem Gegenschlusselement der Wischleiste zur Befestigung zusammenwirkt. Auf diese Weise ist eine einfache Ausbildung des Wischblatts gewährleistet.

Erfindungsgemäß ist die Wischleiste und das Kippstegelement gelenkig miteinander verbunden. Hierbei ist es von besonderem Vorteil, dass dadurch die erste Wischkante und die zweite Wischkante zuverlässig auf der Scheibe aufliegen.

Hierbei ist es von besonderem Vorteil, wenn das Formschlusselement des Kippstegelements und das Gegenschlusselement der Wischleiste eine gelenkige Verbindung bilden.

Eine besonders einfache und kostengünstige und daher vorteilhafte Ausbildung ergibt sich dadurch, dass das Kippstegelement an der Federschiene form- und/oder stoffschlüssig befestigt ist.

Ein besonders gutes Wischbild wird erzielt, wenn das Kippstegelement und die Wischleiste aus verschiedenen Materialien ausgebildet sind. Insbesondere kann auf diese Weise für die jeweiligen Funktionen, also das zuverlässige Kippen einerseits und das saubere Wischen andererseits, jeweils ein optimales Material ausgewählt werden.

Nach der Erfindung ummantelt das Kippstegelement die Federschiene, so dass sich eine einfache und kostengünstige Ausbildung ergibt.

Idealerweise ist das Kippstegelement aus thermoplastischem Polymer ausgebildet. Insbesondere wird auf diese Weise im gesamten Temperaturspektrum des Betriebs des Wischblatts ein optimales Wischergebnis erzielt.

Nach der Erfindung ist das Kippstegelement einstückig mit einem Windabweiselement ausgebildet.

### Beschreibung der Zeichnungen

Verschiedene Ausführungsbeispiele der Erfindung sind in den Zeichnungen dargestellt und in der nachfolgenden Beschreibung näher erläutert. Er zeigen:
Figur 1 ein erfindungsgemäßes Wischblatt in einer schematischen Seitenansicht.
Figuren 2 bis 7 Querschnitte durch erfindungsgemäße Wischblätter, sowie
Figuren 8 und 9 eine Seitenansicht durch ein Kippstegelement eines erfindungsgemäßen Wischblatt.

### Beschreibung der Ausführungsbeispiele

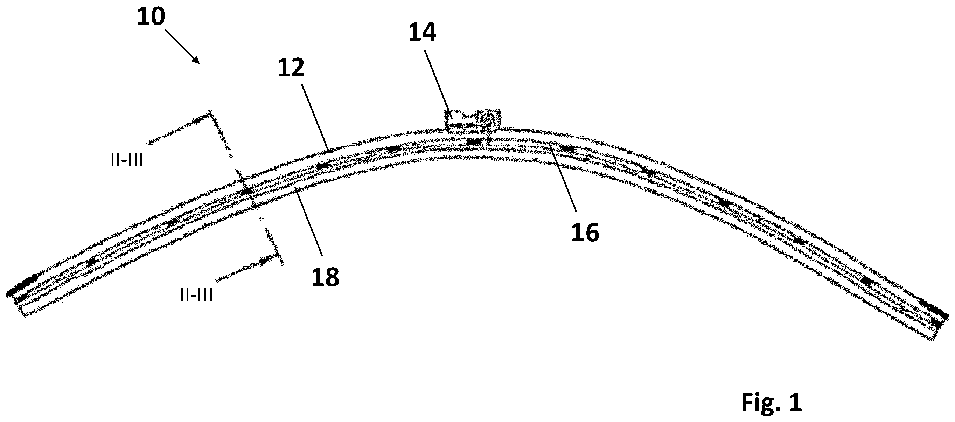

In Figur 1 ist ein erfindungsgemäßes Wischblatt 10 in einer schematischen Seitenansicht gezeigt.

Das Wischblatt 10 umfasst eine Federschiene 12, die ein Haltemittel 14 zur Befestigung an einem Wischerarm, der hier aus Gründen der Übersichtlichkeit nicht gezeichnet ist, ausweist. Das Haltemittel 14 ist entlang der Längserstreckung des Wischblatts 10 etwa mittig angeordnet. Auf der dem Haltemittel 14 abgewandten Seite der Federschiene 12 ist ein Kippstegelement 16 angeordnet, das sich im Wesentlichen über die gesamte Länge des Wischblatts 10, beziehungsweise der Federschiene 12, erstreckt.

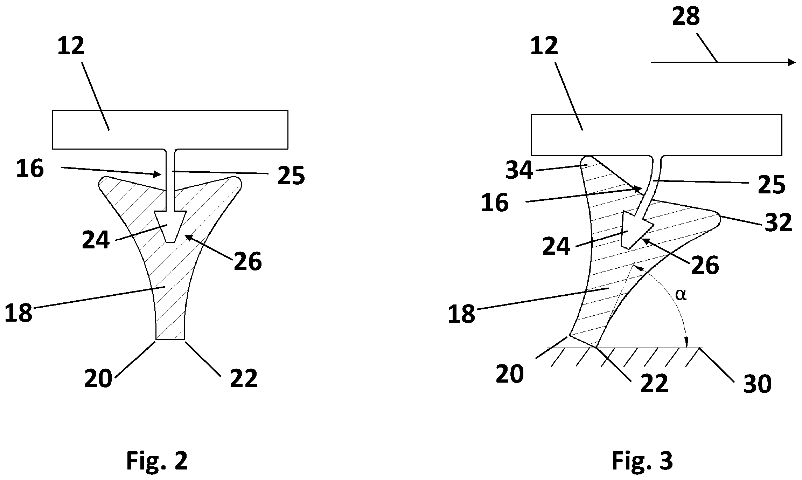

Auf der der Federschiene 12 abgewandten Seite des Kippstegelements 16 ist formschlüssig mit dem Kippstegelement 16 eine Wischleiste 18 verbunden, die nach der Montage auf einem Kraftfahrzeug, auf einer Scheibe 30 (Figur 3) des Kraftfahrzeugs, insbesondere der Windschutzscheibe, aufliegt.

Die Federschiene 12 ist aus einem länglichem Bandstahl gefertigt und vorgebogen, so dass sie in relaxiertem Zustand konvex gebogen ist. Die Vorbiegung ist derart, dass dann, wenn das Wischblatt 10 durch den am Haltemittel 14 befestigten Wischerarm auf die Scheibe 30 gedrückt wird, eine gleichmäßige Auflage der Wischleiste 16 über ihre gesamte Länge auf der Scheibe 30 erzielt wird. Dies wird dadurch erzielt, daß die Vorbiegung der Federschiene 12 stärker ist, als die Krümmung der Scheibe 30 des Kraftfahrzeugs. Dadurch entsteht beim Aufdrücken des Wischblatts 10 durch den Wischerarm auf die Scheibe 30 eine Vorspannung der Federschiene 12, die die Wischleiste 18 entlang ihrer Längserstreckung gleichmäßig auf die Scheibe 30 drückt.

In Figur 2 ist eine schematische Querschnittdarstellung eines erfindungsgemäßen Wischblatts 10 gezeigt.

Die Wischleiste 18 ist aus Gummi, insbesondere EDPM oder Naturkautschuk gefertigt und vom im Wesentlichen dreieckiger Gestalt. Auf seiner, der Federschiene 12 abgewandten Seite, die eine Spitze der dreieckigen Gestalt bildet, sind Wischkanten, mithin eine erste Wischkante 20 und eine zweiten Wischkante 22 ausgebildet, die im Betrieb durch Verformung des Kippstegelements 16 auf der hier nicht gezeigten Scheibe 30, aufliegen. Hierzu ist, im Querschnitt betrachtet, die untere Ecke des Dreiecks abgeschnitten, so daß die im Wesentlichen dreieckige Gestalt im Bereich dieser Ecke anstatt einer Ecke zwei nahe beieinanderliegende Ecken aufweist, die die erste Wischkante 20 und die zweite Wischkante 22 bilden.

Die Wischleiste 18 ist durch das Kippstegelement 16 an der Federschiene 12 befestigt. Zur Befestigung der Wischleiste 18 an der Federschiene 12 weist das Kippstegelement 16 ein Formschlusselement 24 und einen Steg 25 auf. Das Formschlusselement 24 wirkt mit einem Gegenschlusselement 26 in der Wischleiste 18 zusammen und bildet mit diesem eine Formschlussverbindung. Das Kippstegelement 16 ist von im Querschnitt länglicher Gestalt und erstreckt sich ausgehend von der Federschiene 12 in Richtung der Wischleiste 18 und dringt in die Wischleiste 18 ein. Insbesondere ist der Steg 25 des Kippstegelements 16 im Querschnitt betrachtet an einem Ende an der Federschiene 12 befestigt und anderen, freien Ende des Stegs 25 ist das Formschlusselement 24 angeordnet, das im Querschnitt eine im wesentlichen dreieckige Gestalt aufweist. Eines der spitzen Enden des im Querschnitt dreieckigen Formschlusselements 24 ist der Wischleiste 18 zugewandt.

Als Gegenschlusselement 26 ist in der Wischleiste 18 eine zur Form des Formschlusselements 24 entsprechende Aussparung vorgesehen, die das Gegenschlusselement 26 bildet. Die im Wesentlichen dreieckige Ausbildung des Formschlusselements 24 ermöglicht, dass die Wischleiste bei der Montage einfach auf das Kippstegelement 16 aufgesteckt werden kann und sich dadurch eine sichere Verbindung zwischen Kippstegelement 16 und Wischleiste 18 ergibt, die nur mit hohem Kraftaufwand lösbar ist. Dies wird dadurch erzielt, dass die breite Seite des dreieckigen Formschlusselements 24 mit dem Steg 25 verbunden ist, der ebenso in die Wischleiste 18 eindringt. Auf diese Weise ergibt sich eine Hinterschnitt-Verbindung zwischen Wischleiste 18 und Kippstegelement 16.

In Figur 3 ist das erfindungsgemäße Wischblatt 10 aus Figur 2 in einer Betriebsstellung gezeigt. Das Wischblatt 10, das durch den sich bewegenden Wischerarm auf die Scheibe 30 gedrückt wird, wird mit seiner Federschiene 12 über die Scheibe 30 in Richtung des Richtungspfeils 28 geschleppt. Aufgrund der Haftung bzw. Reibung zwischen der Scheibe 30 und der Wischleiste 18 kippt diese um einen Winkel α, so dass lediglich die zweite Wischkante 22 auf der Scheibe 30 aufliegt. Das Kippstegelement 16, besondere der Steg 25 des Kippstegelements 16, ist nun leicht elastisch verformt.

Wie auch in Figur 2 zu sehen, ist die Wischleiste von im Wesentlichen dreieckiger Gestalt. Gegenüberliegend, also auf der Seite der Wischleiste 18, die benachbart zur Federschiene 12 angeordnet ist, sind die zwei weiteren Ecken, der im Wesentlichen dreieckigen Wischleiste 18 und bilden einen ersten Anschlag 32 und einen zweiten Anschlag 34.

Die elastische Verformung des Kippstegelements 16 geht hier nun so weit, dass der zweite Anschlag 34 an der Federschiene 12 anschlägt und somit ein weiteres Verkippen der Wischleiste 18 verhindert.

Verläuft die Wischrichtung entgegen dem Richtungspfeil 28, so wird sich das Kippstegelement 16, mithin der Steg 25, in die entgegengesetzte Richtung verkippen. Die Wischleiste 18 wird dann an seiner ersten Wischkante 22 über die Scheibe 30 gleiten und der erste Anschlag 32 wird die Verkippung der Wischleiste 18 durch Anschlagen an der Federschiene 12, begrenzen.

Das Kippstegelement 16 ist bei den Ausbildungen gemäß Figur 2 und Figur 3 einstückig mit der Federschiene 12 ausgebildet. Bei dieser Ausbildung kann die Federschiene 12 auch aus Kunststoff ausgebildet sein, insbesondere als Spritzguss- oder Extrusionsteil.

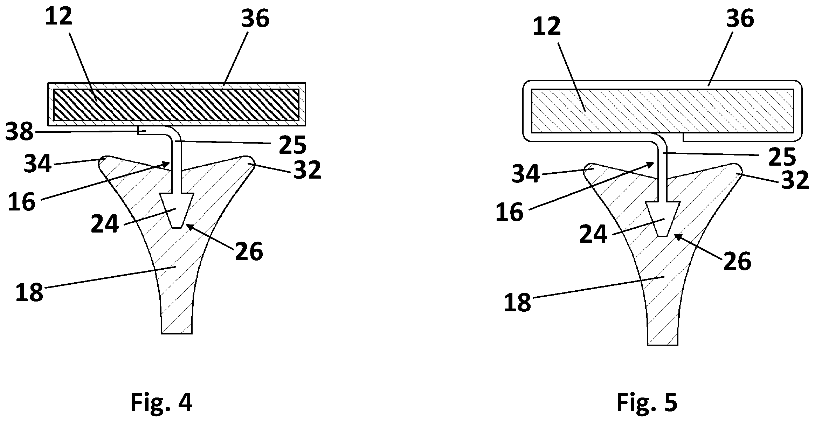

In Figur 4 ist das erfindungsgemäße Wischblatt 10 in einer weiteren Variation aus den Figuren 2 und 3 dargestellt. Im Gegensatz zu Figur 2 und Figur 3 ist das Kippstegelement 16, insbesondere dessen Steg 25, hier separat an einer Ummantelung 36 befestigt, die die Federschiene 12, die hier aus Metall ausgebildet ist, ummantelt. Diese Ummantelung 36 kann bspw. aus Kunststoff ausgebildet sein und die Federschiene 12, die hier aus Stahl ausgebildet ist, im Wesentlichen umschließen. Das Kippstegelement 16 ist hierbei über ein Ultraschallschweißverfahren an der Ummantelung 36 angeschweisst.

In einer Variation kann das Kippstegelement 16 jedoch auch angeklebt oder durch ein anderes stoffschlüssiges Verfahren an der Ummantelung 36 befestigt sein.

In einer weiteren Variation ist auch eine direkte Verbindung an der Federschiene 12 möglich. So kann das Kippstegelement 16 auch direkt an die Federschiene 12 angeklebt, angeschweisst, vernietet oder verschraubt sein. Auch eine Steck- oder Schienenverbindung ist hier möglich.

Zur Verbesserung der Befestigung des Kippstegelements 16 an der Federschiene 12 bzw. deren Ummantelung 36 weist das Kippstegelement 16 in Figur 4 ein Flächenelement 38 auf, das die Anlagefläche zwischen Kippstegelement 16 und Ummantelung 36 bzw. Federschiene 12 vergrößert. Besonders bei einer Klebeverbindung oder einer Schweißverbindung zwischen Steg 25 und Federschiene 12 ist dies vorteilhaft.

In Figur 5 ist eine weitere Variation der Erfindung dargestellt. Das Kippstegelement 16 ist hier einstückig mit der Ummantelung 36 ausgebildet, die die Federschiene 12 im Wesentlichen vollständig ummantelt. Das Kippstegelement 16 ist hierbei typischerweise aus Kunststoff ausgebildet und bspw. im Extrusions- oder Spritzgussverfahren hergestellt. Wie eben den vorangegangenen Ausführungsbeispielen kann die Federschiene 12 auch mit einer Kunststoffschicht versehen sein, die diese im Wesentlichen vollständig beschichtet.

Im Folgenden werden jeweils nur die Unterschiede zu Figuren 2 und 3 beschrieben, so dass die Ausführungen aus Figuren 2 und 3 für die folgenden Ausführungen weitergelten.

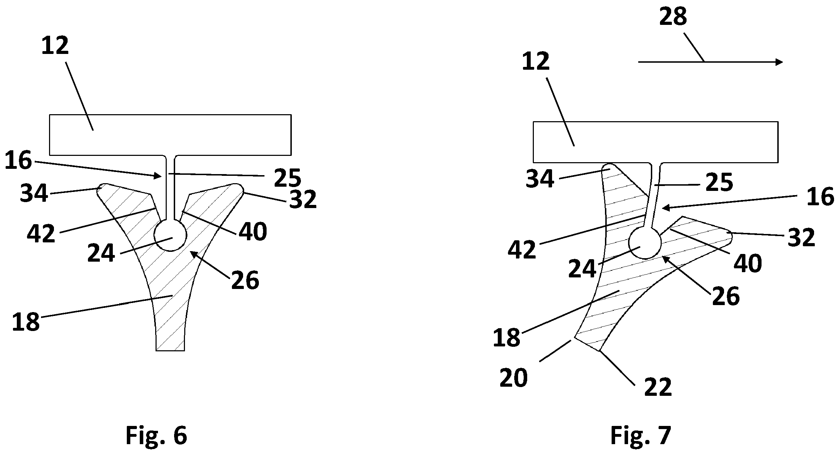

In Figur 6 ist eine weitere Variation eines verbindungsgemäßen Wischblatts 10 beschrieben. Wie in Figuren 2 und 3 ist auch hier das Kippstegelement 16 einstückig mit der Federschiene 12 ausgebildet. In einer Variation kann jedoch auch bei einer Ausbildung nach Figur 6 das Kippstegelement wie in den Figuren 4 und 5 gezeigt, ausgebildet sein.

In der Ausführungsform aus Figur 6 ist lediglich die Ausführung des Formschlusselements 24 und des Gegenschlusselements 26 anders als in den vorangegangenen Figuren 2 bis 5. Bei dieser Ausführungsform ist das Formschlusselement 24 und das Gegenschlusselement 26 derart ausgebildet, dass diese ein Gelenk bilden, so dass eine gelenkige Verbindung zwischen dem Kippstegelement 16, an dessen Ende des Formschlusselement 24 angeordnet ist und der Wischleiste 18, die die als Aussparung ausgebildete Gegenschlusselement 26 aufweist, gebildet ist. Das Kippstegelement 16 ist hier nur wenig elastisch bis starr, da die Beweglichkeit der Wischleiste 18 durch die gelekige Verbidung zwischen Formschlusselement 24 und Gegenschlusselement 26 verwirklicht ist. Hierzu ist das Formschlusselements 24 im Querschnitt rund ausgebildet und entsprechend das gegen Schlusselement 26 als runde Aussparung ausgebildet, die etwa den gleichen Durchmesser wie das Formschlusselements 24 aufweist. Das Formschlusselement 24 ist am Ende des Stegs 25, wie in den vorangegangenen Ausführungsbeispielen, befestigt. Das Gegenschlusselement 26 bildet die Spitze eines V-förmige Ausschnitts der durch eine erste Anschlagswand 40 und eine zweite Anschlagswand 42 gebildet ist und zwar derart, dass eine im Querschnitt schlüssellochartige Ausbildung mit einer Hinterschnitt-Verbindung entsteht. Auf diese Weise lässt sich das im Querschnitt runde Formschlusselements 24 leicht in die Wischleiste 18 einfügen. Die erste Anschlagswand 40 und die zweite Anschlagswand 42 bilden gleichzeitig Anschläge zur Begrenzung des Winkels α (Figur 3). Die genaue Funktion dieser Begrenzungen bzw. Anschläge wird in Figur 7 beschrieben.

Das Formschlusselement 24 ist, wie oben bereits beschrieben, im Querschnitt rund. Korrespondierend dazu ist auch das Gegenschlusselement 26, mithin die Aussparung in der Wischleiste 18 als runde Aussparung ausgebildet, die etwa im Querschnitt mittig in der Wischleiste 18 sitzt. Zum Einfügen des Formschlusselements 24 ist der V-förmige Einschnitt vorgesehen, sodass das am freien Ende des Stegs 25 angeordnete Formschlusselement 24 in die Wischleiste 18, insbesondere das gegen Schlusselement 26, eingeführt werden kann. Der V-förmige Einschnitt ist durch die erste Anschlagswand 40 und die zweite Anschlagswand 42 gebildet. Der Abstand zwischen der ersten Anschlagswand 40 und der zweiten Anschlagswand 42 ist im Bereich des Gegenschlusselements 26 kleiner als der Durchmesser des runden Gegenschlusselements 26, sodass ein Hinterschnitt entsteht und die Wischleiste 18 dadurch sicher am Kippstegelements 16 gehaltert ist.

In Figur 7 ist die Ausbildung des Wischblatts 10 aus Figur 6 im Betrieb gezeigt. Wie auch in den vorhergehenden Zeichnungen werden nur die Unterschiede zu den anderen Ausführungsbeispielen erläutert. Die Ausführungen im Hinblick auf die anderen Ausführungsbeispiele gelten daher ansonsten auch für dieses.

Die Wischleiste 18 ist durch das Schleppen des Wischblatts 10 bzw. der Federschiene 12 des Wischblatts 10 in Richtung des Richtungspfeils 28 zur Seite gekippt. Nun liegt die zweite Wischkante 22 auf der Scheibe 30 auf. Da das Formschlusselement 24 zusammen mit dem Gegenschlusselement 26 eine gelenkige Verbindung bilden, ist das Kippstegelement 16, bzw. der Steg 25 des Kippstegelements 16 nur wenig verkippt. Durch die gelenkige Verbindung zwischen Kippstegelement 16 und Wischleiste 18 berührt nun die zweite Anschlagswand 42 den Steg 25 des Kippstegelements 16 und begrenzt somit den Winkel α zwischen Kippstegelement 16 und Wischleiste 18. Das leichte Verkippen bzw. elastische Verbiegen des Stegs 25 des Kippstegelements 16 ist der Winkel α weiterhin durch den zweiten Anschlag 34 begrenzt, der an der Federschiene 12 anschlägt.

Bei einem Wechsel der Bewegungsrichtung, entgegen dem Richtungspfeil 28 werden das Formschlusselement 24 und das Gegenschlusselement 26 scharnierartig zusammenwirken, so dass die erste Wischkante 20 auf der Scheibe 30 aufliegt und der Steg 25 des Kippstegelements 16 die erste Anschlagswand 40 berührt. Ein weiteres Auslenken wird durch das Kippstegelement 16 bzw. durch elastische Verformung des Stegs 25 des Kippstegelements 16 soweit begrenzt, als das der erste Anschlag 32 an der Federschiene 12 anschlägt.

Nach der Erfindung ist die Ausbildung aus Figuren 6 und 7 mit den Ausführungen von Figuren 4 oder 5 kombiniert , so dass das Kippstegelement 16 an der Ummantelung 36 der Federschiene 12 angeordnet ist. Der erste Anschlag 32 und der zweite Anschlag 24 berühren dann nicht das Federelement selbst sondern die Ummantelung 36. Um Wiederholungen zu vermeiden wir hierzu auf die vorangegangenen Figuren 4 und 5 verwiesen, deren Ausbildung auf die Ausbildung von Figuren 6 und 7 übertragen werden kann.

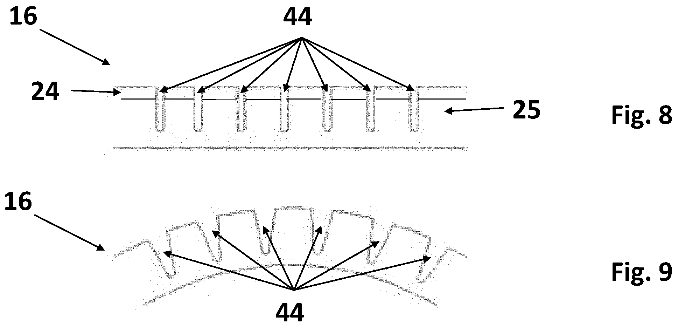

In Figur 8 und Figur 9 ist das Kippstegelement 16 eines erfindungsgemäßen Wischblatts in einer schematischen Seitenansicht gezeigt.

Das Kippstegelement 16 ist von im Wesentlichen länglicher Gestalt und weist im Wesentlichen die Länge der Federschiene 12 (Figur 1) auf. Da sich das Wischblatt entlang seiner Längserstreckung der Scheibenoberfläche der Scheibe 30 anzupassen hat, ist eine Beweglichkeit entlang der Längserstreckung des Kippstegelements erforderlich. Zur Verbesserung dieser Beweglichkeit sind Einschnitte 44 vorgesehen, die sich quer zu Längserstreckung, ausgehend vom Formschlusselement 24 in Richtung der Stege 25 erstrecken. Die Einschnitte 44 sind hierbei regelmäßig beabstandet, können in einer Variation jedoch auch unterschiedlich beabstandet sein, insbesondere an den Enden des Wischblatts 10 reduziert sein, mithin weniger Einschnitte bzw. größer beabstandete Einschnitte im Bereich der Enden des Wischblattes 10 vorgesehen sein.

In einer Variation ist es auch möglich, die Einschnitte ausgehend von Flächenelement 38 in Richtung des Formschlusselements 24 vorzusehen. Dies ist insbesondere dann sinnvoll, wenn das Kippstegelement 16 beweglich an der Federschiene 12, bspw. durch eine Kederschiene befestigt ist. Figur 9 zeigt das Kippstegelement 16 aus Figur 8 in einer gebogenen, mithin der relaxierten Form der Federschiene 12 angepassten Form.

Das Kippstegelement 16 ist in der Regel als Kunststoffteil aus einem thermoplastischen Polymer ausgebildet. Ergänzend kann auf der der Wischleiste 18 abgewandten Seite das Kippstegelement 16 ein Windabweiselement aufweisen. Das Windabweiselement kann bei einer derartigen Ausgestaltung oberhalb der Federschiene 12, aber auch unterhalb der Federschiene 12 oder direkt vor der Federschiene 12 angeordnet sein. Ein derartiges Kippstegelement 16 kann beispielsweise die Federschiene 12 ummanteln, wie beispielsweise in Figur 5 gezeigt, und neben der Ummantelung 36, dem Steg 25 und dem Formschlusselement 24 einstückig das Windabweiselement aufweisen. Ein derartiges Kippstegelement 16 kann in einfacher Weise durch ein Extrusionsverfahren hergestellt werden. Das Windabweiselement kann aber auch als separates Teil am Kippstegelement 16 oder an der Federschiene 12 befestigt, beispielsweise angeklebt oder angeschweisst, sein.

## Patentansprüche

1. Wischblatt (10), insbesondere für eine Scheibe (30) eines Kraftfahrzeugs, umfassend eine Federschiene (12), an der ein Haltemittel (14) zur Befestigung an einem Wischerarm angeordnet ist, eine Wischleiste (18) und ein Kippstegelement (16), wobei das Kippstegelement (16) formschlüssig an der Wischleiste (18) befestigt ist, sowie an der Federschiene (12) befestigt ist und dadurch die Federschiene (12) mit der Wischleiste (18) verbindet, wobei die Wischleiste (18) und das Kippstegelement (16) gelenkig verbunden sind, wobei die Wischleiste (18) eine erste Wischkante (20) und eine zweite Wischkante (22) aufweist und im Betrieb durch Verformung des Kippstegelements (16) jeweils nur die erste Wischkante (20) oder die zweite Wischkante (22) auf der Scheibe (30) aufliegt, **dadurch gekennzeichnet dass** das Kippstegelement (16) die Federschiene (12) zumindest teilweise, insbesondere vollständig, ummantelt, und das Kippstegelement (16) einstückig mit einem Windabweiselement ausgebildet ist.

2. Wischblatt (10) nach Anspruch 1, **dadurch gekennzeichnet, dass** das Kippstegelement (16) ein Formschlußelement (24) aufweist, das mit einem Gegenschlußelement (26) der Wischleiste (18) zur Befestigung zusammenwirkt.

3. Wischblatt (10) nach Anspruch 2, **dadurch gekennzeichnet, dass** Formschlußelement (24) und Gegenschlußelement (26) eine gelenkige Verbindung bilden.

4. Wischblatt (10) nach einem der vorhergehenden Ansprüche, **dadurch gekennzeichnet, dass** das Kippstegelement (16) an der Federschiene (12) form- oder stoffschlüssig befestigt ist.

5. Wischblatt (10) nach einem der vorhergehenden Ansprüche, **dadurch gekennzeichnet, dass** Kippstegelement (16) und Wischleiste (18) aus verschiedenen Materialien ausgebildet sind.

6. Wischblatt (10) nach einem der vorhergehenden Ansprüche, **dadurch gekennzeichnet, dass** das Kippstegelement (16) aus thermoplastischem Polymer ausgebildet ist.

## Claims

1. Wiper blade (10), in particular for a window (30) of a motor vehicle, comprising a spring bar (12), on which a holding means (14) for fastening to a wiper arm is arranged, a wiper strip (18) and a tilting web element (16), wherein the tilting web element (16) is fastened to the wiper strip (18) in a form-fitting manner, and is fastened to the spring bar (12) and, as a result, connects the spring bar (12) to the wiper strip (18), wherein the wiper strip (18) and the tilting web element (16) are connected in an articulated manner, wherein the wiper strip (18) has a first wiper edge (20) and a second wiper edge (22) and, during operation, only the first wiper edge (20) or the second wiper edge (22) in each case rests on the window (30) by deformation of the tilt web element (16), **characterized in that** the tilt web element (16) encases the spring bar (12) at least partially, in particular completely, and the tilting web element (16) is formed in one piece with a wind deflection element.

2. Wiper blade (10) according to Claim 1, **characterized in that** the tilting web element (16) has a form-fitting element (24) which interacts with a mating connection element (26) of the wiper strip (18) for fastening purposes.

3. Wiper blade (10) according to Claim 2, **characterized in that** the form-fitting element (24) and the mating connection element (26) form an articulated connection.

4. Wiper blade (10) according to one of the preceding claims, **characterized in that** the tilting web element (16) is fastened to the spring bar (12) in a form-fitting or integrally joined manner.

5. Wiper blade (10) according to one of the preceding claims, **characterized in that** the tilting web element (16) and the wiper strip (18) are formed from different materials.

6. Wiper blade (10) according to one of the preceding claims, **characterized in that** the tilting web element (16) is formed from thermoplastic polymer.

## Revendications

1. Balai d'essuie-glace (10), en particulier pour un pare-brise (30) de véhicule automobile, comprenant un rail à ressort (12) sur lequel est agencé un moyen de maintien (14) pour la fixation à un bras d'essuie-glace, une lame d'essuyage (18) et un élément (16) formant barrette de basculement, l'élément (16) formant barrette de basculement étant fixé par complémentarité de forme à la lame d'essuyage (18) et au rail à ressort (12), reliant ainsi le rail à ressort (12) à la lame d'essuyage (18), la lame d'essuyage (18) et l'élément (16) formant barrette de basculement étant reliés de manière articulée, la lame d'essuyage (18) comprenant un premier bord d'essuyage (20) et un deuxième bord d'essuyage (22), et, en fonctionnement, seul le premier bord d'essuyage (20) ou le deuxième bord d'essuyage (22) reposant sur le pare-brise (30) en raison de la déformation de l'élément (16) formant barrette de basculement, **caractérisé en ce que** l'élément (16) formant barrette de basculement enveloppe au moins partiellement, et en particulier complètement, le rail à ressort (12), et l'élément (16) formant barrette de basculement est réalisé d'un seul tenant avec un élément déflecteur de vent.

2. Balai d'essuie-glace (10) selon la revendication 1, **caractérisé en ce que** l'élément (16) formant barrette de basculement comprend un élément (24) de liaison par complémentarité de forme, qui coopère avec un élément complémentaire de liaison (26) de la lame d'essuyage (18) pour la fixation.

3. Balai d'essuie-glace (10) selon la revendication 2, **caractérisé en ce que** l'élément (24) de liaison par complémentarité de forme et l'élément complémentaire de liaison (26) forment une liaison articulée.

4. Balai d'essuie-glace (10) selon l'une des revendications précédentes, **caractérisé en ce que** l'élément (16) formant barrette de basculement est fixé au rail à ressort (12) par complémentarité de forme ou par adhérence.

5. Balai d'essuie-glace (10) selon l'une des revendications précédentes, **caractérisé en ce que** l'élément (16) formant barrette de basculement et la lame d'essuyage (18) sont réalisés dans des matériaux différents.

6. Balai d'essuie-glace (10) selon l'une des revendications précédentes, **caractérisé en ce que** l'élément (16) formant barrette de basculement est réalisé en polymère thermoplastique.
